# EUROPÄISCHE PATENTSCHRIFT

(11) **EP 1 685 339 B1**
(45) Veröffentlichungstag und Bekanntmachung des Hinweises auf die Patenterteilung: **16.01.2008**
(21) Anmeldenummer: 04790396.8
(22) Anmeldetag: 14.10.2004
(51) Int. Cl.: F16H 55/17

(54) **ZAHNRIEMENRAD UND DAMIT AUSGESTATTETER ZAHNRIEMENANTRIEB**
SYNCHRONOUS BELT WHEEL AND SYNCHRONOUS BELT DRIVE EQUIPPED THEREWITH
ROUE A COURROIE CRANTEE ET ENTRAINEMENT A COURROIE CRANTEE

(30) Priorität: 16.10.2003 DE 10347986
(43) Veröffentlichungstag der Anmeldung: 02.08.2006
(73) Patentinhaber: ZF Lenksysteme GmbH, 73527 Schwäbisch Gmünd (DE)
(72) Erfinder: BUDAKER, Martin, 73540 Heubach (DE); LAY, Andreas, 74523 Schwäbisch Hall (DE)
(86) Internationale Anmeldenummer: PCT/EP2004/011536
(87) Internationale Veröffentlichungsnummer: WO 2005/038302

(56) Entgegenhaltungen:
- DE-A- 3 026 685
- DE-A- 3 909 950
- DE-A- 19 623 809

## Beschreibung

Die Erfindung betrifft ein Zahnriemenantrieb für eine elektrisch unterstützte Servolenkung nach dem Oberbegriff des Anspruchs 1, und wie aus der DE 3909950A bekannt ist.

Zur Kraftübertragung in motorbetriebenen Vorrichtungen werden verschiedenartige Riementriebe, wie etwa Flachriemen- oder Keilriementriebe, eingesetzt. Sollen große Kräfte möglichst schlupffrei übertragen werden, so kommen bevorzugt Zahnriemenantriebe (auch kurz Zahnriementriebe genannt) zum Einsatz. Hierbei greifen die Zähne des Zahnriemens in Ausnehmungen des Zahnriemenrads (auch Zahnscheibe genannt) ein, so dass sich ein Formschluss ergibt, der auch bei großer Belastung die Kraftübertragung ermöglicht. Dies macht sich u.a. auch die Fahrzeugindustrie zu Nutze. Beispielsweise werden solche Zahnriemenantriebe auch für die Kraftübertragung in Servolenksystemen, insbesondere sog. Elektrolenkungen mit Kugelumlaufgewinde und achsparalleler Anordnung des Elektromotors, zum Einsatz. Es hat sich gezeigt, dass der Eingriff der Zähne in die Ausnehmungen des Zahnriemenrads, insbesondere der Eingriff beim Einlauf des Riemens auf der Lasttrumseite, störende Geräusche, erzeugt, die es zu reduzieren gilt.

Zur Verbesserung der Laufruhe der Eingriffsdauer und Überdeckung eines Stirnrades mit einer Geradverzahnung wird in der DE196 23 809 A1 ein Stirnrad vorgeschlagen, bei dem die Geradverzahnung wenigstens zwei nebeneinander ausgebildete Verzahnungen gleicher Verzahnungsgeometrie aufweist. Zwischen den benachbarten Verzahnungen ist ein Werkzeugauslaufbereich ausgebildet. Die beiden Verzahnungen sind gegeneinander um einen Bruchteil der Teilung versetzt.

Aus der DE 31 34 595 C2 ist ein Zahnriemenantrieb bekannt, bei dem zur Verringerung der Lauf- und Eingriffsgeräusche die Zähne des Zahnriemens und die Ausnehmungen des Zahnriemenrads zueinander passend gestaltet sind. Dort wird u.a. eine mathematische Gleichung für die Dimensionierung der Zahngeometrie angegeben.

In der Patentschrift US 4,037,485 wird vorgeschlagen, dass die Zähne des Zahnriemens eine größere Höhe haben als die Tiefe der Ausnehmungen des Zahnriemenrads. Dadurch wird erreicht, dass der Zahnriemen kompressibel in das Zahnriemenrad eingreift. Es muss also eine genaue Dimensionierung eingehalten werden.

Mit diesen bekannten Maßnahmen werden zwar die Lauf- und Eingriffsgeräusche von Zahnriemenantrieben reduziert. Der Einsatz solcher Zahnriemenrädern für den Zahnriemenantrieb elektrisch unterstützter Servolenkungen hat aber gezeigt, dass die Geräusche noch weiter reduziert werden müssen, um nicht vom Fahrer als störend wahrgenommen zu werden.

Daher ist es Aufgabe der Erfindung, einen Zahnriemenantrieb für eine elektrisch unterstützte Servolenkung vorzuschlagen, bei dem eine deutliche Verringerung der Lauf- und Eingriffsgeräusche erreicht wird.

Gelöst wird die Aufgabe durch einen Zahnriemenantrieb für eine elektrisch unterstützte Servolenkung mit den Merkmalen des Anspruchs 1.

Demnach wird vorgeschlagen, dass das Zahnriemenrad für den Zahnriemenantrieb mindestens zwei Zahnscheiben umfasst, die parallel zueinander angeordnet sind und die jeweils einen Zahnriemen antreiben, dass die Zahnscheiben eine gleichartige Verzahnung mit Zahnköpfen und Zahnlücken ausweisen, und dass die Verzahnungen in Umfangsrichtung zueinander um einen Versatz versetzt angeordnet sind, wodurch die Zahnriemen zueinander versetzt in die Zahnlücken eingreifen und dass die Verzahnung eine unsymmetrische ist, wobei die Zahnköpfe größer, d.h. breiter, als die Zahnlücken gestaltet sind, wodurch die Teilung der Verzahnung größer als der Wert Eins ist.

Mit diesen Maßnahmen wird auf einfache Weise eine deutliche Reduzierung der Lauf- und Eingriffsgeräusche erzielt. Denn der Erfindung liegt die Erkenntnis zu Grunde, dass durch den Versatz der bei jedem Zahnriemen auftretende Polygoneffekt, der maßgeblich zur Geräuschentwicklung beiträgt, stark zurück gedrängt wird. Beim Umlauf, insbesondere beim Ein- und Auslaufen der zueinander versetzten Zahnriemen wird somit folgendes erreicht: Bei jeder beliebigen Radstellung läuft zumindest immer einer der Zahnriemen auf dem äußeren Zylinder des Zahnriemenrades, so dass der gesamte Zahnriementrieb ähnlich gute Laufeigenschaften wie ein Flachriementrieb erhält, wobei die für den Zahnriementrieb typische schlupffreie Übertragung voll erhalten bleibt. Die hier vorgeschlagene Konstruktion vereinigt also die Vorteile eines Flachriementriebs mit denen eines Zahnriementriebs.

Bevorzugte Ausführungen der Erfindung ergeben sich aus den Unteransprüchen. In diesem Zusammenhang ist es besonders vorteilhaft, wenn die Zahnköpfe doppelt so breit wie die Zahnlücken gestaltet sind, wodurch die Teilung der Verzahnung gleich dem Wert Zwei ist. Durch diese Maßnahmen werden die durch die Zahnköpfe bestimmten Auflageflächen, mit denen die Riemen auf dem Zylinder des Zahnriemenrades aufliegen erhöht, wes wiederum zu einer höheren Laufruhe führt.

Auch ist es von Vorteil, wenn der Versatz kleiner als eine Zahnlücke ist, insbesondere gleich halb so klein wie eine Zahnlücke ist. Wie Versuche gezeigt haben, wird damit ein besonders ruhiger Riemenlauf erreicht.

Weiterhin ist es vorteilhaft, wenn das Zahnriemenrad zwei Zahnscheiben und einen dazwischen angeordneten und sich in Umfangsrichtung erstreckenden Wulst aufweist, der die Zahnriemen trennt und führt.

Außerdem sollte das Zahnriemenrad vorzugsweise aus zwei miteinander verbundenen Zahnscheiben bestehen und die Zahnscheiben mittels Verbindungselementen, insbesondere Nietverbindungselementen, oder mittels Verbindungsmaterial, insbesondere Klebstoff, verbunden sein.

Im Weiteren wird nun die Erfindung näher beschrieben anhand eines Ausführungsbeispiels und unter Bezugnahme auf folgende schematische Zeichnungen:
- Fig. 1: zeigt die Gesamtansicht eines erfindungsgemäßen Zahnriemenrades für einen Zahnriemenantrieb einer elektrisch unterstützten Servolenkung;
- Fig. 2: zeigt im Detail das Ein- und Auslaufen von Zahnriemen auf dem Zahnriemenrad;
- Fig. 3: im Detail die Verzahnungen des Zahnriemenrades; und
- Fig. 4: ein Schema für den Versatz zwischen den Verzahnungen.

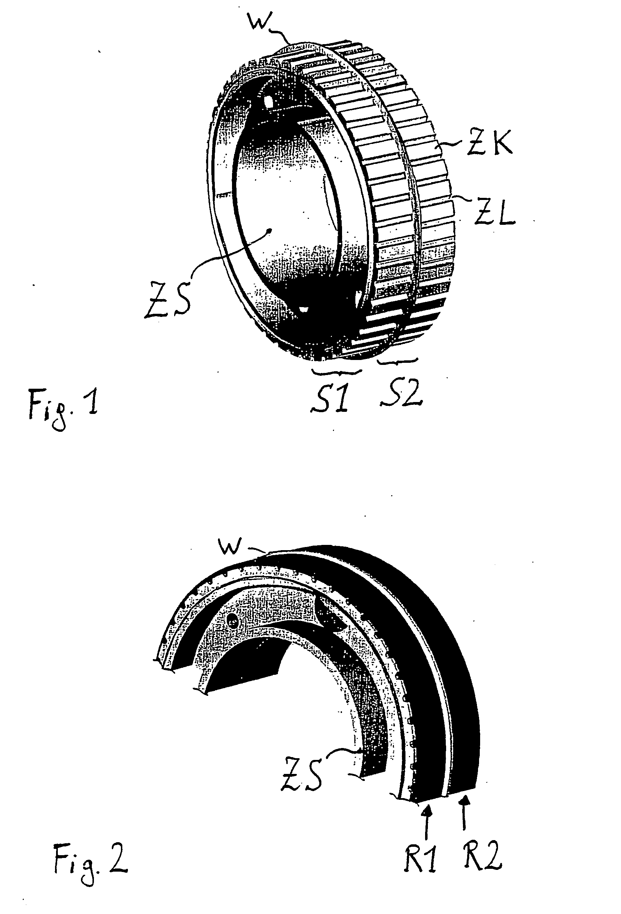

In der Fig. 1 ist zunächst ein erfindungsgemäß aufgebautes Zahnriemenrad ZS für den Zahnriemenantrieb einer elektrisch unterstützten Servolenkung in der Gesamtansicht dargestellt. Das Zahnriemenrad enthält eine erste Zahnscheibe S1 und eine zweite Zahnscheibe S2, die axial zueinander in paralleler Anordnung zusammengefügt sind. Zwischen den beiden Zahnscheiben befindet sich in Umfangsrichtung eine wulstförmige Erhebung W, die beide Zahnscheiben S1 und S2 voneinander trennt. Sowohl die erste als auch die zweite Zahnscheibe haben dieselbe Verzahnung. Das bedeutet, dass das Verhältnis zwischen Zahnköpfen ZK und Zahnlücken ZL bei beiden Zahnscheiben gleich ist. Jedoch sind beide Scheiben S1 und S2 zueinander versetzt angeordnet. Somit kommen die auf den Zahnscheiben laufenden Zahnriemen nicht synchron zum Eingriff.

Die Lage der Zahnriemen R1 und R2 auf dem Umfang des Zahnriemenrades ZS ist in der Fig. 2 näher dargestellt. Wie dort zu sehen ist, trägt der Wulst W dazu bei, dass beide Riemen R1 und R2 voneinander getrennt umlaufen und in der Mitte geführt werden.

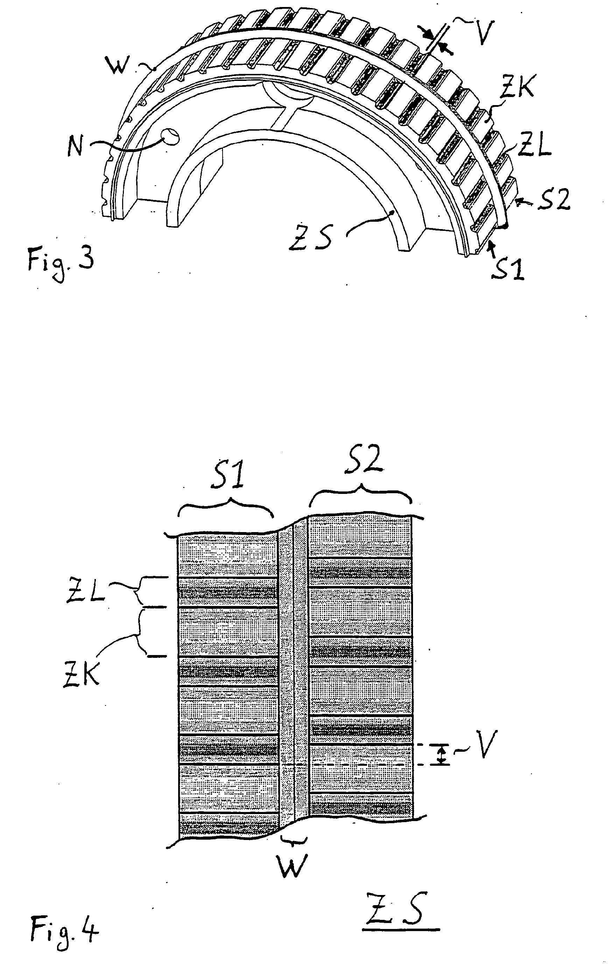

Die Fig. 3 zeigt im näheren Detail die Verzahnungen der beiden durch Nietverbindungen N zusammengefügten Zahnscheiben S1 und S2. Die beiden Zahnscheiben sind nun in Umfangsrichtung um einen Versatz V zueinander verschoben. Dieser Versatz V ist kleiner als eine Zahnlücke ZL und beträgt vorzugsweise die halbe Länge einer Zahnlücke. Durch diesen Versatz V wird erreicht, das beiden Zahnriemen R1 und R2 zeitversetzt einlaufen und auslaufen, so dass die Eingriffe nicht exakt gleichzeitig erfolgen. Durch diese Maßnahme wird der sogenannte Polygoneffekt reduziert. Denn beide Riemenläufe kompensieren sich in ihrem Polygoneffekt und der dadurch verursachten Geräuschentwicklung gegenseitig. Die vorgeschlagenen Maßnahmen bewirken, dass abwechselnd immer einer der Riemen auf dem Zylinder läuft.

In der Fig. 4 ist in einer schematischen Darstellung dargestellt, wie der Versatz V zwischen beiden Zahnscheiben S1 und S2 dimensioniert ist. Der Teilungsversatz der Scheiben wird gerade so groß eingestellt, dass in jeder Radstellung immer ein Riemen beim Ein- und Auslaufen aus dem Eingriff mit der jeweiligen Scheibe auf dem Zylinderbereich des Zahnriemenrades ZS läuft. Im Gesamtverhalten der Riemenanordnung verhält sich das Riemenpaar ähnlich einem Flachriemen. Somit entsteht nur eine reduzierte Geräuschentwicklung.

Zudem hat jede der beiden Zahnscheiben S1 und S2 dieselbe Verzahnung, d.h. die Verteilung von Zahnköpfen ZK und Zahnlücken ZL ist auf beiden Scheiben dieselbe. Vorzugsweise sind die Zahnköpfe wesentlich größer ausgeprägt als die Zahnlücken. Dadurch wird der Riemenlauf weiterhin verbessert. Der Versatz zwischen den beiden Zahnscheiben S1 und S2 beträgt in einer bevorzugten Ausführung genau die Hälfte der Länge einer Zahnlücke ZL. Zwischen den beiden Zahnscheiben ist die wulstförmige Ausprägung W angeordnet, die beide Zahnriemen beim Umlauf voneinander trennt.

Der mit einem solchen Zahnriemenrad ausgebildete Zahnriementrieb verhält sich hinsichtlich der Laufeigenschaften und Geräuschentwicklung ähnlich einem Flachriementrieb. Auf der anderen Seite stellt der Eingriff der Zähne einen schlupffreien Lauf der Riemen sicher. Somit werden die Vorteile von Flachriementrieben mit denen von Zahnriementrieben in einer Anordnung vereinigt.

Der beschriebene Zahnriementrieb ist in verschiedensten Getriebestufen einsetzbar. Es hat sich gezeigt, dass er besonders vorteilhaft einzusetzen ist in Getrieben, die in Elektrolenkungen zum Einsatz kommen. Hier sind besonders sogenannts achsparallele Antriebe zu nennen, bei denen der Elektromotor parallel zur Zahnstange angeordnet ist. Die Übertragung erfolgt dann über einen solchen Zahnriementrieb und entsprechende Kugelumläufe. Die Anordnung kann sehr kompakt und kostengünstig realisiert werden.

## Patentansprüche

1. Zahnriemenantrieb für eine elektrisch unterstützten Servolenkung mit folgenden Merkmalen:
• ein Zahnriemen (R1) greift in Zahnlücken (ZL) des Zahnriemenrades (ZS) ein,
• das Zahnriemenrad (ZS) umfasst mindestens zwei Zahnscheiben (S1, S2), die parallel zueinander angeordnet sind und die jeweils einen Zahnriemen (R1, R2) antreiben,
• die Zahnscheiben (S1, S2) weisen eine gleichartige Verzahnung mit Zahnköpfen (ZK) und Zahnlücken (ZL) aus,
• die Verzahnungen sind in Umfangsrichtung versetzt zueinander um einen Versatz (V) angeordnet, wodurch die Zahnriemen (R1, R2) zueinander versetzt in die Zahnlücken (ZL) eingreifen,
**gekennzeichnet durch folgende Merkmale:**
• die Verzahnung ist eine unsymmetrische Verzahnung,
• die Zahnköpfe (ZK) sind größer, insbesondere breiter, als die Zahnlücken (ZL) gestaltet, wodurch die Teilung der Verzahnung größer als der Wert Eins ist.

2. Zahnriemenantrieb für eine elektrisch unterstützten Servolenkung nach Anspruch 1, **dadurch gekennzeichnet, dass** die Zahnköpfe (ZK) des Zahnriemenrades (ZS) doppelt so groß wie die Zahnlücken (ZL) gestaltet sind, wodurch die Teilung der Verzahnung gleich dem Wert Zwei ist.

3. Zahnriemenantrieb für eine elektrisch unterstützten Servolenkung nach Anspruch 1, **dadurch gekennzeichnet, dass** der Versatz (V) kleiner als eine Zahnlücke (ZL) ist, insbesondere gleich halb so klein wie eine Zahnlücke (ZL) ist.

4. Zahnriemenantrieb für eine elektrisch unterstützten Servolenkung nach Anspruch 1, **dadurch gekennzeichnet, dass** das Zahnriemenrad (ZS) zwei Zahnscheiben (S1, S2) und einen dazwischen angeordneten und sich in Umfangsrichtung erstreckenden Wulst (W) aufweist, der die Zahnriemen (R1, R2) trennt und führt.

5. Zahnriemenantrieb für eine elektrisch unterstützten Servolenkung nach Anspruch 1, **dadurch gekennzeichnet, dass** das Zahnriemenrad (ZS) aus zwei miteinander verbundenen Zahnscheiben (S1, S2) besteht und das die Zahnscheiben (S1, S2) mittels Verbindungselementen, insbesondere Nietverbindungselementen (N), oder mittels Verbindungsmaterial, insbesondere Klebstoff, verbunden sind.

6. Zahnriemenantrieb für eine elektrisch unterstützten Servolenkung nach Anspruch 1 oder 5, **dadurch gekennzeichnet, dass** das Zahnriemenrad (ZS), insbesondere jede der Zahnscheiben (S1, S2), einteilig gesintert und mittels Kunststoff gespritzt ist.

## Claims

1. Synchronous belt drive for an electrically assisted power steering system having the following features:
• a synchronous belt (R1) engages in gaps (ZL) between the teeth of the synchronous belt wheel (ZS),
• the synchronous belt wheel (ZS) comprises at least two toothed discs (S1, S2) which are arranged parallel to one another and which each drive a toothed belt (R1, R2),
• the toothed discs (S1, S2) have an equal number of teeth with tooth heads (ZK) and gaps (ZL) between the teeth,
• the tooth arrangements are arranged offset with respect to one another in the circumferential direction by an offset (V), as a result of which the toothed belts (R1, R2) engage with an offset with respect to one another in the gaps (ZL) between the teeth,
**characterized by** the following features:
• the tooth arrangement is an asymmetrical tooth arrangement,
• the tooth heads (ZK) are larger, in particular wider, than the gaps (ZL) between the teeth, as a result of which the pitch of the tooth arrangement is larger than the value one.

2. Synchronous belt drive for an electrically assisted power steering system according to Claim 1, **characterized in that** the tooth heads (ZK) of the toothed belt wheel (ZS) are made twice as large as the gaps (ZL) between the teeth, as a result of which the pitch of the tooth arrangement is equal to the value two.

3. Synchronous belt drive for an electrically assisted power steering system according to Claim 1, **characterized in that** the offset (V) is smaller than one gap (ZL) between the teeth, in particular equal to half one gap (ZL) between the teeth.

4. Synchronous belt drive for an electrically assisted power steering system according to Claim 1, **characterized in that** the toothed belt wheel (ZS) has two toothed discs (S1, S2) and a bead (W) which is arranged between them, extends in the circumferential direction and separates and guides the toothed belts (R1, R2).

5. Synchronous belt drive for an electrically assisted power steering system according to Claim 1, **characterized in that** the toothed belt wheel (ZS) is composed of two toothed discs (S1, S2) which are connected to one another, and **in that** the toothed discs (S1, S2) are connected by means of connecting elements, in particular rivet connecting elements (N), or by means of connecting material, in particular adhesive.

6. Synchronous belt drive for an electrically assisted power steering system according to Claim 1 or 5, **characterized in that** the toothed belt wheel (ZS), in particular each of the toothed discs (S1, S2), is sintered in one piece and injection moulded by means of plastic.

## Revendications

1. Entraînement à courroie dentée pour une direction assistée électrique, comprenant les caractéristiques suivantes :
- une courroie dentée (R1) vient en prise dans des creux de dents (ZL) de la roue de courroie dentée (ZS),
- la roue de courroie dentée (ZS) comprend au moins deux couronnes dentées (S1, S2) qui sont disposées parallèlement l'une à l'autre et entraînent une courroie dentée respective (R1, R2),
- les couronnes dentées (S1, S2) présentent une denture de même type avec des crêtes de dents (ZK) et des creux de dents (ZL),
- les dentures sont décalées l'une par rapport à l'autre dans la direction périphérique d'un décalage (V), de sorte que les courroies dentées (R1, R2) viennent en prise dans les creux de dents (ZL) de manière décalée l'une de l'autre,
**caractérisé par** les caractéristiques suivantes :
- la denture est une denture asymétrique,
- les crêtes de dents (ZK) sont plus grandes, notamment plus larges, que les creux de dents (ZL), de sorte que la division de la denture soit,plus grande que la valeur un.

2. Entraînement à courroie dentée pour une direction assistée électrique selon la revendication 1, **caractérisé en ce que** les crêtes de dents (ZK) de la roue de courroie dentée (ZS) sont deux fois plus grandes que les creux de dents (ZL), de sorte que la division de la denture soit égale à la valeur deux.

3. Entraînement à courroie dentée pour une direction assistée électrique selon la revendication 1, **caractérisé en ce que** le décalage (V) est inférieur à un creux de dent (ZL), notamment est deux fois plus petit qu'un creux de dent (ZL).

4. Entraînement à courroie dentée pour une direction assistée électrique selon la revendication 1, **caractérisé en ce que** la roue de courroie dentée (ZS) présente deux couronnes dentées (S1, S2) et un bourrelet (W) disposé entre elles et s'étendant dans la direction périphérique, qui sépare et guide les courroies dentées (R1, R2).

5. Entraînement à courroie dentée pour une direction assistée électrique selon la revendication 1, **caractérisé en ce que** la roue de courroie dentée (ZS) se compose de deux couronnes dentées (S1, S2) connectées l'une à l'autre et **en ce que** les couronnes dentées (S1, S2) sont connectées au moyen d'éléments de connexion, notamment d'éléments de connexion par rivets (N), ou au moyen d'un matériau de connexion, notamment un adhésif.

6. Entraînement à courroie dentée pour une direction assistée électrique selon la revendication 1 ou 5, **caractérisé en ce que** la roue de courroie dentée (ZS), en particulier chacune des couronnes dentées (S1, S2), est frittée d'une seule pièce et est pulvérisée avec de l'adhésif.
